# EUROPEAN PATENT SPECIFICATION

(11) **EP 2 010 830 B1**
(45) Date of publication and mention of the grant of the patent: **06.04.2011**
(21) Application number: 07724477.0
(22) Date of filing: 23.04.2007
(51) Int. Cl.: F24J 2/06, G02B 7/182, H01L 31/0232, G02B 17/06

(54) **RADIATION CONCENTRATING DEVICE**
STRAHLUNGSKONZENTRATIONSVORRICHTUNG
DISPOSITIF DE CONCENTRATION DE RAYONNEMENT

(30) Priority: 24.04.2006 IT PD20060153
(43) Date of publication of application: 07.01.2009
(73) Proprietor: Optoelettronica Italia S.R.L., 38100 Trento (IT); Molon, Sergio, 39012 Merano (IT)
(72) Inventor: MOLON, Sergio, 39012 Merano (IT); MAGLIONE, Alfredo, 38050 Povo (IT)
(74) Representative: Modiano, Micaela Nadia
(86) International application number: PCT/EP2007/003547
(87) International publication number: WO 2007/121971

(56) References cited:
- WO-A-2006/000834
- US-A- 4 315 500
- US-A- 4 771 764
- US-B1- 6 953 038

## Description

### Technical Field

The present invention relates to a radiation concentrating device.

### Background Art

Radiation concentrating devices are currently known particularly for use in the provision of solar or photovoltaic panels.

In a first type of these concentrating devices, the function of concentrating element is performed by a Fresnel lens or variations thereof.

The Fresnel lens is arranged between the sunlight source and the focal point of the photovoltaic cell.

This first type of Fresnel-lens concentrating device generally entails important energy losses between 10% and 20% due to limited transmittance.

Further, the precision of the focus generated by a Fresnel lens is limited to a few spectral lines and is affected by substantial chromatic aberration which impairs the efficiency of the concentrating device; in order to obviate this problem, generally the dimensions of the receiver (sensor or transducer) associated with the lens are increased, with a consequent overall increase in the production costs of the device.

A second type of concentrating device has a parabolic mirror with a longitudinal focus, i.e., a focus which is distributed along a line or band which is substantially straight, and therefore requires solar cells which are assembled in mutually adjacent rows along the directrix of the focus, with consequent problems linked to dissipation of the beat accumulated by the cells and by the supports on which they are mounted.

Further, for both of these types of known concentrating device, the concentrating element, mirror or Fresnel lens, and the receiving element are mounted separately on separate supports, which must be then mutually positioned laboriously and with the appropriate skill in order to allow correct redirection of the radiation toward the active area of the receiving element.

Examples of solar radiation concentrator devices are available from the documents US 4 771 764, US 6 593 038, WO 2006/000834 and US 4 315 500.

### Disclosure of the Invention

The aim of the present invention is to provide a radiation concentrating device which is capable of obviating the drawbacks shown by known types of concentrating device.

Within this aim, an object of the present invention is to provide a concentrating device which has a higher efficiency than known devices.

Another object of the present invention is to provide a concentrating device in which the heat accumulation can be dissipated more efficiently than in known types of device.

Another object of the present invention is to provide a concentrating device which can be assembled more rapidly and at least as accurately as known types of concentrating device.

A further object of the present invention is to provide a concentrating device particularly but not exclusively adapted for providing solar or photovoltaic panels.

A still further object of the present invention is to provide a radiation concentrating device which can be manufactured with known systems and technologies.

This aim and these and other objects, which will become better apparent hereinafter, are achieved by a radiation concentrating device, according to the present invention, that has the features set forth in claim 1.

### Brief Description of the Drawings

Further characteristics and advantages of the invention will become better apparent from the following detailed description of three preferred but not exclusive embodiments thereof, illustrated by way of non-limiting example in the accompanying drawings, wherein:
Figure 1 is a sectional side view of a device according to the invention in a first embodiment;
Figure 2 is a top view of the device according to the invention in a second embodiment;
Figure 3 is a side view of the device according to the invention, in the second embodiment, provided with a plurality of mirrors along a line, with the respective receiving elements;
Figure 4 is another top view of the device according to the invention in the second embodiment, composed of a plurality of mirrors sorted by rows and columns;
Figure 5 is a sectional side view of the device according to the invention in a third embodiment;
Figure 6 is a front view of the device of Figure 5.

### Ways of carrying out the Invention

With reference to the figures, a radiation concentrating device according to the invention is generally designated by the reference numeral 10 in its first embodiment.

The concentrating device 10 comprises, in its minimum configuration, a substantially parabolic mirror 11, which is designed to reflect the energy radiation or electromagnetic radiation that reaches it, designated schematically by lines 12, so that it converges toward an active area 13 of a receiving element 14 arranged in front.

The active area 13 is interposed between the focal point of the mirror 11 and the mirror 11 itself.

The substantially parabolic mirror 11 is shaped like a sector of a paraboloid formed by the rotation of a parabola about its own axis of symmetry.

The mirror 11 and the receiving element 14 are fixed by way of coupling means, described in greater detail hereinafter, to a same base 15.

The active area 13 of the receiving element 14 has a transverse dimension A which is smaller than a transverse dimension B of the mirror 11 arranged in front.

In the exemplary embodiments of the invention described here by way of non-limiting example, the active area 13 is substantially quadrangular and has a much smaller transverse dimension A than the corresponding transverse dimension B of the mirror 11, which also has a rectangular profile in plan view.

Therefore, the active receiving area 13 is such as to collect the radiation reflected by the mirror 11, which is in any case made to converge by the mirror 11 toward a region which is contained in the neighborhood of the central axis of the mirror 11.

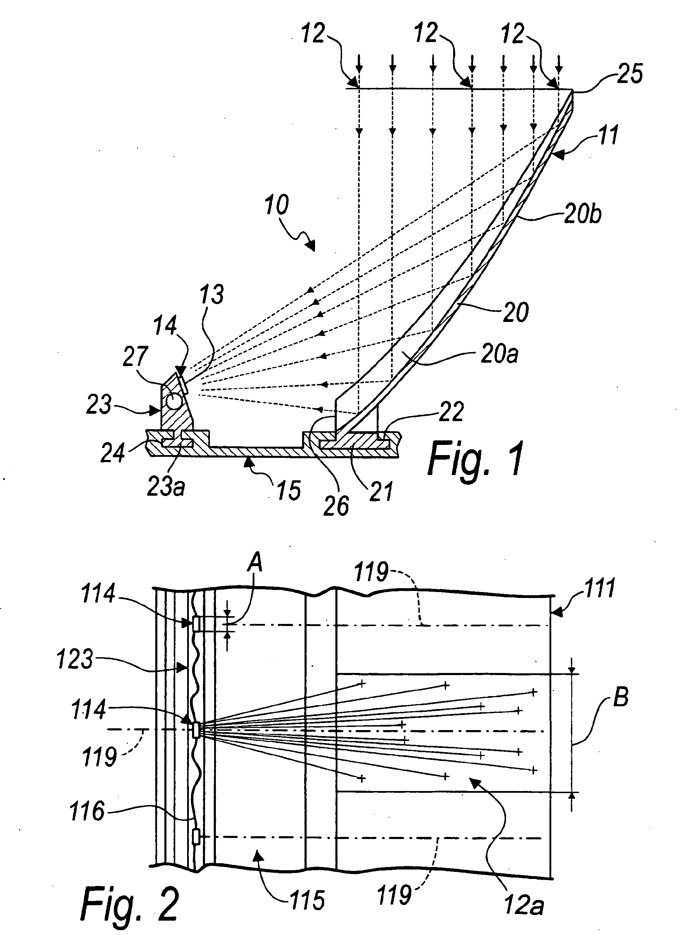

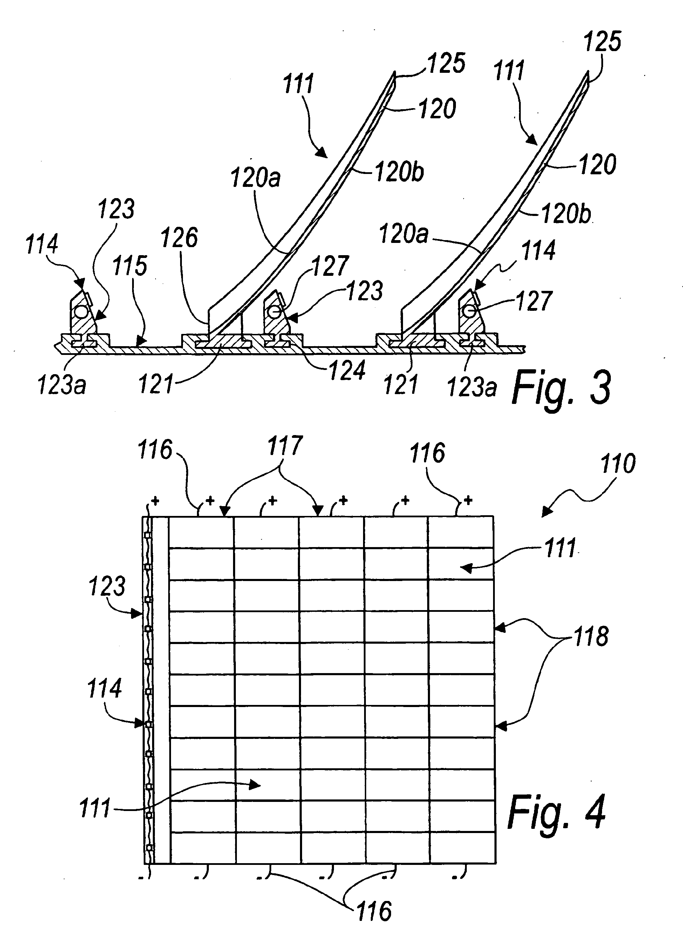

In a second embodiment of the device, designated by the reference numeral 110 in Figures 2, 3 and 4, the base 115 is designed to support a plurality of parabolic mirrors 111 and corresponding receiving elements 114 which are mutually connected by means of conductors 116.

The parabolic mirrors 111 and the respective receiving elements 114 are arranged side by side so as to form parallel and adjacent rows 117 and laterally adjacent lines 118.

Each receiving element 114, except for the ones arranged on the outer perimeter of the base 115, is arranged proximate to the back 120b of the next neighboring mirror 111, which lies above it.

In Figure 2, the radiation reflected toward the receiving element 114 is designated by the reference numeral 12a.

As mentioned, the mirrors 111 are arranged advantageously in rows 117 and lines 118 so as to affect continuously, with respect to a direction which is perpendicular to the arrangement of the base 115, the area covered by the base 115 on which they are fitted; in this manner, the mirrors 111 catch all of the radiation that arrives on them at right angles to the base 115 and the surface for collecting the radiation 12 is maximized.

Conveniently, for this purpose, the upper end edges 25 and 125 and the lower end edges 26 and 126 of a mirror 11 and 111 are cut along a direction which is parallel to the direction of the radiation 12.

The receiving elements 14 and 114 can be sensors, transducers or photovoltaic cells and in general sensors which are sensitive to electromagnetic radiation.

In particular, the receiving elements 14 and 114 can be sensors for detecting analog or digital signals.

The receiving elements 14 and 114 must be positioned along the longitudinal central axis 119 of the corresponding mirror 111.

Each mirror 11 and 111 is constituted by a parabolic body 20 and 120, the concave face 20a and 120a of which is coated with optical-grade reflective material.

The parabolic body 20 and 120 is made of metallic material, plastic material, ceramic material or composite materials; depending on the electromagnetic band that must be captured by the device 10 and 110, the mirror is provided and coated with the material that is most suitable to obtain the best index of reflectance.

In particular, the curvature of the parabola that defines the paraboloid of which the mirror 11 and 111 is a sector is calculated with the equation y = Ax² + Bx + C, in which the parameter A is comprised between 0 and 10, the parameter B is comprised between 0 and 10, and the parameter C is comprised between -100 and +100.

The means for coupling the mirror 11 and 111 to the base 15 and 115 are provided by a lower portion 21 and 121 of the body 20 and 120 of the mirror, which is contoured so as to be inserted in a complementary shaped seat 22 and 122 provided on the base 15 and 115.

Likewise, the means for coupling the receiving element 14 and 114 to the base 15 and 115 are constituted by a support 23 and 123 for said receiving element; below the support 23 and 123 there is a portion 23a and 123a which is contoured so as to be inserted in a complementary shaped seat 24 and 124 provided on the base 15 and 115.

The support 23 and 123 is made of a material which is capable of dissipating the excess heat from the supported receiving element 14 and 114.

The lower portions 21, 23a, 121 and 123a respectively of the body 20 and 120 of the mirror and of the support 23 and 123 are substantially T-shaped and are adapted to be inserted in the corresponding seats 22, 24, 122 and 124, which are formed by complementarily shaped slots which can be accessed from one side of the base 15 and 115.

In this manner, the assembly of the device 110 according to the invention is very simple, quick and precise; the base 115 on which the slots for the lower portions 21, 23a, 121 and 123a are formed is in fact provided monolithically, and mounting the mirrors and receiving elements thereon requires only the insertion of said lower portions in the respective slots, without any other long and meticulous maneuvers for seeking the optimum mutual arrangement of the mirrors and the corresponding receiving elements.

The support 23 and 123 for the receiving element 14 and 114 has a through hole 27 and 127 for the flow therein of coolant liquid for energy recovery of heat, if the device 10 and 110 according to the invention is used for example to provide a solar panel.

The device 10 and 110, if used to provide solar or photovoltaic panels, comprises means, not shown for the sake of simplicity, for following automatically the source of the radiation 12 in order to vary the trim of said device, since the radiation 12 must reach the mirrors with a constant angle.

The device 10 and 110 according to the invention can be assembled easily in a modular manner together with other identical devices to provide panels of any size according to requirements.

A known type of these follower means can be for example a heliostat.

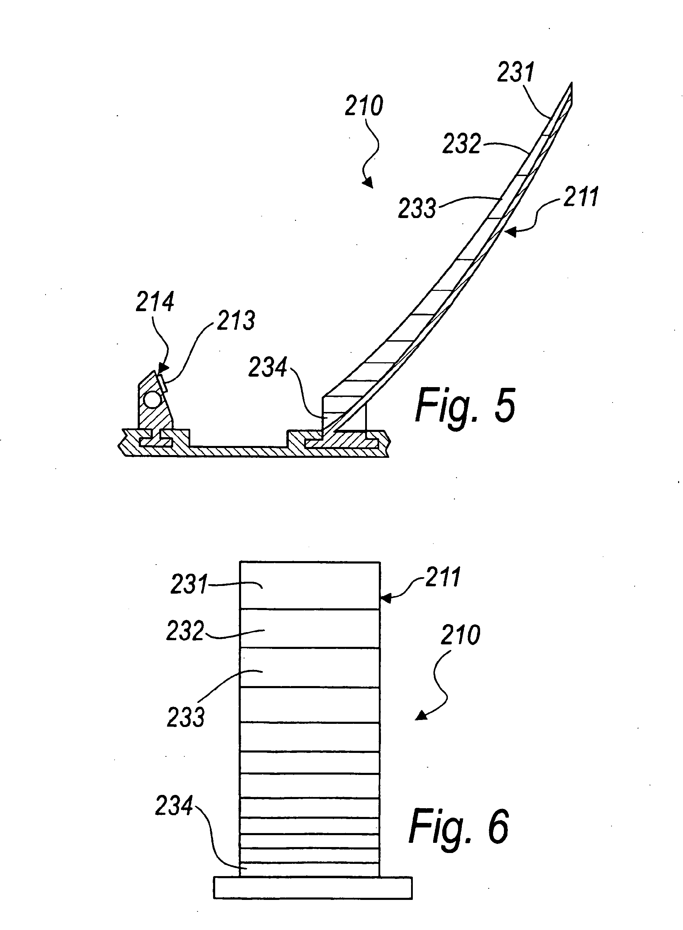

In a third embodiment of the invention, shown in Figures 5 and 6 and designated therein by the reference numeral 210, the substantially parabolic mirror 211 is composed of a plurality of reflective elements arranged side by side, of which the figure illustrates by way of example the ones designated by the reference numerals 231, 232, 233 and 234.

The reflective elements 231, 232, 233 and 234, while not providing an exactly parabolic mirror 211, approximate its contour and perform the same function thereof of reflecting radiation toward a same active receiving area 213 of the receiving element 214.

The individual reflective elements 231, 232, 233 and 234, while not reflecting toward a same focal point, in any case direct the reflected radiation toward the same area 213.

Equivalently and as an alternative, the mirror 211 can be provided with machinings, micromachinings and surface treatments such as to no longer have a single continuous reflective surface but a plurality of reflective elements which form a discontinuous reflective surface.

In practice it has been found that the invention thus described solves the problems noted in known types of radiation concentrating device.

In particular, the present invention provides a concentrating device which has a higher efficiency than known devices: the absence of lenses and in particular of Fresnel lenses in fact improves transmittance and eliminates the problem of chromatic aberration which is typical of lenses.

Moreover, the present invention provides a concentrating device in which thermal accumulation can be dissipated more efficiently than in known types of device, by virtue of the through hole on the support for the receiving elements, inside which it is possible to circulate a transfer fluid for dissipating the accumulated heat.

Further, the present invention provides a concentrating device which can be assembled more rapidly and at least as accurately as known types of concentrating device.

Moreover, the present invention provides a radiation concentrating device which is particularly but not exclusively suitable to provide solar or photovoltaic panels.

Moreover, the present invention provides a radiation concentrating device which can be manufactured with known systems and technologies.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

## Claims

1. A radiation concentrating device, comprising a substantially parabolic mirror (11), which is adapted to reflect the energy radiation or electromagnetic radiation (12) that reaches it so as to converge toward an active area (13) of a receiving element (14) arranged in front, said active area being interposed between the focal point of the mirror (11) and the mirror (11) itself, said mirror (11) and said receiving element (14) being fixed by way of coupling means to a same base (15), **characterized in that** said coupling means for coupling the mirror (11) to the base (15) are constituted by a lower portion (21) of the body (20) of the mirror, which is contoured so as to be inserted in a complementary shaped seat (22) provided on said base (15) and said coupling means for coupling the receiving element (14) to said base (15) are constituted by a support (23) for said element (14), having below a portion (23a) which is contoured so as to be inserted in a complementarily shaped seat (24) provided on said base (15), said receiving element (14) being positioned on said base (15) in front of said mirror (11) along the longitudinal axis (119) of the mirror, by way of said support (23) inserted in said shaped seat (24) provided on said base (15), whereby said complementary shaped seats (22, 24) are accessible from one side of the base.

2. The device according to claim 1, **characterized in that** said active area (13) has a transverse dimension (A) which is smaller than the transverse dimension (B) of the mirror (11) arranged in front.

3. The device according to the preceding claims, **characterized in that** said substantially parabolic mirror (11) is shaped like a sector of a paraboloid which is defined by the rotation of a parabola about an axis which passes through its focal point.

4. The device according to claim 1, **characterized in that** said base (115) is designed to support a plurality of parabolic mirrors (111) and corresponding receiving elements (114) which are mutually connected by means of conductors (116).

5. The device according to claim 4, **characterized in that** said parabolic mirrors (111) and the respective receiving elements (114) are arranged side by side so as to form parallel and adjacent rows (117) and parallel and adjacent lines (118).

6. The device according to claims 4 or 5, **characterized in that** each receiving element (114), except for the ones arranged on the outside perimeter of the base (115), is arranged proximate to the back (120b) of the nearby subsequent mirror (111), which lies above it.

7. The device according to one of the claims 4-6, **characterized in that** said mirrors (111) are arranged in rows (117) and lines (118) so as to affect with continuity, with respect to a direction which is perpendicular to the arrangement of the base (115), the area covered by the base (115) on which they are mounted, so as to collect all of the radiation that reaches the base (115) at right angles thereto and so as to maximize the surface for collecting radiation (12).

8. The device according to one of the claims 4-7, **characterized in that** said receiving elements (14, 114) are selectively sensors, transducers or photovoltaic cells.

9. The device according to claim 8, **characterized in that** said receiving elements (14, 114) are sensors for detecting analog or digital signals.

10. The device according to claim 7, **characterized in that** said receiving elements (14, 114) are sensors which are sensitive to electromagnetic radiation.

11. The device according to one or more of the preceding claims, **characterized in that** said receiving elements (14,114) are each arranged along the longitudinal central axis (19, 119) of the corresponding mirror (11, 111).

12. The device according to one or more of the preceding claims, **characterized in that** a mirror (11, 111) is constituted by a body (20,120) whose concave face (20a, 120a) is lined with optical-grade reflective material.

13. The device according to claim 12, **characterized in that** said body (20, 120) is made of metallic material, plastic material, ceramic material or composite materials.

14. The device according to one or more of the preceding claims, **characterized in that** the curvature of the parabola that forms the paraboloid of which said mirror (11, 111) is a sector is calculated with the equation y - Ax²+Bx + C, in which the parameter A is comprised between 0 and 10, the parameter B is comprised between 0 and 10, and the parameter C is comprised between -100 and +100.

15. The device according to any of the preceding claims, **characterized in that** said support (23, 123) is made of a material which is capable of dissipating the excess heat from the supported receiving element (14, 114).

16. The device according to one or more of the preceding claims, **characterized in that** said lower portions (21, 121, 23a, 123a) of the body of the mirror (20, 120) and of the support (23, 123) for a receiving element (14, 114) are substantially T-shaped and are adapted to be inserted in the corresponding seats (22, 24, 122, 124) formed by complementarily shaped slots which can be accessed from one side of the base (15, 115).

17. The device according to one or more of the preceding claims, **characterized in that** the upper end edge (25, 125) and the lower end edge (26, 126) of the mirror (11, 111) are truncated along a direction which is parallel to the direction of the radiation (12).

18. The device according to one or more of the preceding claims, **characterized in that** said support (23, 123) for a receiving element (14, 114) has a through hole (27, 127) for the flow of a coolant liquid for the energy recovery of heat.

19. The device according to one or more of the preceding claims, **characterized in that** it comprises means for automatically following the source of the radiation (12) in order to vary the trim of said device (10, 110).

20. The device according to one or more of the preceding claims, **characterized in that** said substantially parabolic mirror (211) is composed of a plurality of reflective elements arranged side-by-side (231, 232, 233, 234), said reflective elements (231, 232, 233, 234), being contoured so as to approximate the shape of a parabolic sector and are being adapted to perform its same function of reflecting radiation toward a same active receiving area (213) of a receiving element (214) arranged in front.

21. The device according to one or more of the preceding claims, **characterized in that** the substantially parabolic mirror (211) can be provided by means of machinings, micromachinings and surface treatments so as to have a reflective surface which is no longer unique and continuous but a plurality of reflective elements which form a discontinuous reflective surface.

## Patentansprüche

1. Strahlungskonzentriereinrichtung, die einen im Wesentlichen parabolischen Spiegel (11) umfasst, der eingerichtet ist, Energiestrahlung oder elektromagnetische Strahlung (12), die ihn erreicht, so zu reflektieren, dass sie in Richtung auf ein aktives Gebiet (13) eines Empfangselementes (14), das davor angeordnet ist, konvergiert, wobei das aktive Gebiet zwischen dem Brennpunkt des Spiegels (11) und dem Spiegel (11) selbst angeordnet ist, wobei der Spiegel (11) und das Empfangselement (14) mittels Befestigungsmitteln an der selben Basis (15) befestigt sind, **dadurch gekennzeichnet, dass** die Befestigungsmittel zum Befestigen des Spiegels (11) an der Basis (15) durch einen unteren Abschnitt (21) des Körpers (20) des Spiegels gebildet werden, der geformt ist, um in einen komplementär geformten Sitz (22) eingeführt zu werden, der an der Basis (15) vorgesehen ist, und die Befestigungsmittel zum Befestigen des Empfangselementes (14) an der Basis (15) durch eine Stütze (23) für das Element (14) gebildet werden, die unten einen Abschnitt (23a) aufweist, der geformt ist, um in einen komplementär geformten Sitz (24) eingeführt zu werden, der an der Basis (15) vorgesehen ist, wobei das Empfangselement (14) an der Basis (15) vor dem Spiegel (11) entlang der Längsachse (119) des Spiegels angeordnet wird, indem die Stütze (23) in den geformten Sitz (24), der an der Basis (15) vorgesehen ist, eingeführt wird, wobei die komplementär geformten Sitze (22, 24) von einer Seite der Basis zugänglich sind.

2. Vorrichtung nach Anspruch 1, **dadurch gekennzeichnet, dass** das aktive Gebiet (13) eine Querausdehnung (A) hat, die kleiner ist als die Querausdehnung (B) des Spiegels (11), der vorne angeordnet ist.

3. Vorrichtung nach den vorstehenden Ansprüchen, **dadurch gekennzeichnet, dass** der im Wesentlichen parabolische Spiegel (11) wie ein Sektor eines Paraboloids geformt ist, der durch die Drehung einer Parabel um eine Achse definiert ist, die durch ihren Brennpunkt verläuft.

4. Vorrichtung nach Anspruch 1, **dadurch gekennzeichnet, dass** die Basis (115) ausgestaltet ist, eine Mehrzahl von parabolischen Spiegeln (111) und zugehörigen Empfangselementen (114) zu stützen, die untereinander durch Leiter (116) verbunden sind.

5. Vorrichtung nach Anspruch 4, **dadurch gekennzeichnet, dass** die parabolischen Spiegel (111) und die entsprechenden Empfangselemente (114) nebeneinander angeordnet sind um parallele und benachbarte Reihen (117) und parallele und benachbarte Linien (118) zu formen.

6. Vorrichtung nach den Ansprüchen 4 oder 5, **dadurch gekennzeichnet, dass** jedes Empfangselement (114) außer denjenigen, die an dem äußeren Umfang der Basis (115) angeordnet sind, benachbart zu der Rückseite (120b) des nächsten sich anschließenden Spiegels (111) angeordnet ist, die über ihm liegt.

7. Vorrichtung nach einem der Ansprüche 4 bis 6, **dadurch gekennzeichnet, dass** die Spiegel (111) in Reihen (117) und Linien (118) angeordnet sind, um bezüglich einer Richtung, die senkrecht auf die Anordnung der Basis (115) steht, kontinuierlich auf die Fläche zu wirken, die durch die Basis (115), auf der sie befestigt sind, bedeckt ist, um die gesamte Strahlung zu sammeln, die die Basis (115) in einem rechten Winkel dazu erreicht um so die Oberfläche zum Sammeln der Strahlung (12) zu maximieren.

8. Vorrichtung nach einem der Ansprüche 4 bis 7, **dadurch gekennzeichnet, dass** die Empfangselemente (14, 114) wahlweise Sensoren, Transducer oder photovoltaische Zellen sind.

9. Vorrichtung nach Anspruch 8, **dadurch gekennzeichnet, dass** die Empfangselemente (14, 114) Sensoren zum Detektieren analoger oder digitaler Signale sind.

10. Vorrichtung nach Anspruch 7, **dadurch gekennzeichnet, dass** die Empfangselemente (14, 114) Sensoren sind, die empfindlich für elektromagnetische Strahlung sind.

11. Vorrichtung nach einem oder mehreren der vorstehenden Ansprüche, **dadurch gekennzeichnet, dass** die Empfangselemente (14, 114) entlang der longitudinalen Zentralachse (19, 119) des entsprechenden Spiegels (11, 111) angeordnet sind.

12. Vorrichtung nach einem oder mehreren der vorstehenden Ansprüche, **dadurch gekennzeichnet, dass** ein Spiegel (11, 111) durch einen Körper (20, 120) gebildet wird, dessen konkave Fläche (20a, 120a) mit einem optisch reflektierenden Material beschichtet ist.

13. Vorrichtung nach Anspruch 12, **dadurch gekennzeichnet, dass** der Körper (20, 120) aus metallischem Material, Plastikmaterial, keramischem Material oder Verbundmaterialien hergestellt ist.

14. Vorrichtung nach einem oder mehreren der vorstehenden Ansprüche, **dadurch gekennzeichnet, dass** die Krümmung der Parabel, die den Paraboloid formt, von dem der Spiegel (11, 111) ein Sektor ist, durch die Gleichung y=Ax² + Bx + C berechnet wird, in der der Parameter A zwischen 0 und 10, der Parameter B zwischen 0 und 10 und der Parameter C zwischen -100 und +100 liegt.

15. Vorrichtung nach einem der vorstehenden Ansprüche, **dadurch gekennzeichnet, dass** die Stütze (23, 123) aus einem Material hergestellt ist, das in der Lage ist, die überschüssige Wärme des gestützten Empfangselementes (14, 114) abzuführen.

16. Vorrichtung nach einem oder mehreren der vorstehenden Ansprüche, **dadurch gekennzeichnet, dass** die unteren Abschnitte (21, 121, 23a, 123a) des Körpers des Spiegels (20, 120) und der Stütze (23, 123) für ein Empfangselement (14, 114) im Wesentlichen T-förmig sind und angepasst sind, um in die entsprechenden Sitze (22, 24, 122, 124) eingeführt zu werden, die durch komplementär geformte Schlitze gebildet sind, die von einer Seite der Basis (15, 115) zugängig sind.

17. Vorrichtung nach einem oder mehreren der vorstehenden Ansprüche, **dadurch gekennzeichnet, dass** die obere Kante (25, 125) und die untere Kante (26, 126) des Spiegels (11, 111) entlang einer Richtung geschnitten sind, die parallel zur Richtung der Strahlung (12) ist.

18. Vorrichtung nach einem oder mehreren der vorstehenden Ansprüche, **dadurch gekennzeichnet, dass** die Stütze (23, 123) für ein Empfangselement (14, 114) ein Durchgangsloch (27, 127) aufweist für den Durchfluss einer Kühlflüssigkeit für die Energierückgewinnung der Wärme.

19. Vorrichtung nach einem oder mehreren der vorstehenden Ansprüche, **dadurch gekennzeichnet, dass** sie Mittel zum automatischen Folgen einer Strahlungsquelle (12) umfasst, um die Trimmung der Vorrichtung (10, 110) zu variieren.

20. Vorrichtung nach einem oder mehreren der vorstehenden Ansprüche, **dadurch gekennzeichnet, dass** der im Wesentlichen parabolische Spiegel (211) aus einer Mehrzahl von nebeneinander angeordneten Spiegelelementen (231, 232, 233, 234) gebildet ist, wobei die Spiegelelemente (231, 232, 233, 234) so geformt sind, dass sie die Form eines parabolischen Sektors annähern und angepasst sind, seine gleiche Funktion zu erfüllen, Strahlung auf ein gleiches aktives Empfangsgebiet (213) eines Empfangselementes (214) zu reflektieren, das davor angeordnet ist.

21. Vorrichtung nach einem oder mehreren der vorstehenden Ansprüche, **dadurch gekennzeichnet, dass** der im Wesentlichen parabolische Spiegel (211) durch maschinelle Bearbeitungen, Mikrobearbeitungen und Oberflächenbehandlungen bereitgestellt werden kann, um eine Spiegeloberfläche zu haben, die nicht länger einstückig und kontinuierlich, sondern eine Mehrzahl von Spiegelelementen, die eine diskontinuierliche Spiegeloberfläche bilden, ist.

## Revendications

1. Dispositif de concentration de rayonnement, comprenant un miroir sensiblement parabolique (11), qui est conçu pour réfléchir le rayonnement d'énergie ou le rayonnement électromagnétique (12) qui l'atteint de façon à le faire converger vers une zone active (13) d'un élément récepteur (14) disposé en face, ladite zone active étant intercalée entre le foyer du miroir (11) et le miroir (11) proprement dit, ledit miroir (11) et ledit élément récepteur (14) étant fixés à un même socle (15) à l'aide de moyens de montage, **caractérisé en ce que** lesdits moyens de montage pour monter le miroir (11) sur le socle (15) sont constitués par une partie inférieure (21) du corps (20) du miroir, qui est profilée de manière à être insérée dans un logement de forme complémentaire (22) ménagé sur le socle (15) et lesdits moyens de montage pour monter l'élément récepteur (14) sur ledit socle (15) sont constitués par un support (23) pour ledit élément (14), ayant sur le dessous une partie (23a) profilée de manière à être insérée dans un logement de forme complémentaire (24) ménagé sur ledit socle (15), ledit élément récepteur (14) étant placé sur ledit socle (15) en face du miroir (11) sur l'axe longitudinal (119) du miroir, par l'intermédiaire dudit support (23) inséré dans ledit siège profilé (24) ménagé sur ledit socle (15), grâce à quoi lesdits logements (22, 24) de forme complémentaire sont accessibles d'un côté du socle.

2. Dispositif selon la revendication 1, **caractérisé en ce que** ladite zone active (13) a une dimension transversale (A) plus petite que la dimension transversale (B) du miroir (11) disposé en face.

3. Dispositif selon les revendications précédentes, **caractérisé en ce que** ledit miroir sensiblement parabolique (11) a la forme d'un secteur de paraboloïde défini par la rotation d'une parabole autour d'un axe passant par son foyer.

4. Dispositif selon la revendication 1, **caractérisé en ce que** ledit socle (115) est conçu pour supporter une pluralité de miroirs paraboliques (111) et d'éléments récepteurs correspondants (114) connectés les uns aux autres à l'aide de conducteurs (116).

5. Dispositif selon la revendication 4, **caractérisé en ce que** lesdits miroirs paraboliques (111) et les éléments récepteurs respectifs (114) sont disposés côte à côte de manière à former des rangées parallèles et adjacentes (117) et des colonnes parallèles et adjacentes (118).

6. Dispositif selon la revendication 4 ou 5, **caractérisé en ce que** chaque élément récepteur (114), sauf ceux disposés sur le pourtour extérieur du socle (115), est disposé tout près du dos (120b) du miroir voisin suivant (111) situé au-dessus de lui.

7. Dispositif selon l'une des revendications 4 à 6, **caractérisé en ce que** lesdits miroirs (111) sont disposés en rangées (117) et colonnes (118) de manière à assurer la continuité, par rapport à une direction perpendiculaire à la disposition du socle (115), de la zone couverte par le socle (115) sur laquelle ils sont montés, afin d'intercepter la totalité du rayonnement qui atteint le socle (115) perpendiculairement à celui-ci et de manière à donner les plus grandes dimensions possibles à la surface destinée à intercepter le rayonnement (12).

8. Dispositif selon l'une des revendications 4 à 7, **caractérisé en ce que** lesdits éléments récepteurs (14, 114) sont, sélectivement, des capteurs, des transducteurs ou des cellules photovoltaïques.

9. Dispositif selon la revendication 8, **caractérisé en ce que** lesdits éléments récepteurs (14, 114) sont des détecteurs servant à détecter des signaux analogiques ou numériques.

10. Dispositif selon la revendication 7, **caractérisé en ce que** lesdits éléments récepteurs (14, 114) sont des capteurs sensibles au rayonnement électromagnétique.

11. Dispositif selon une ou plusieurs des revendications précédentes, **caractérisé en ce que** lesdits éléments récepteurs (14, 114) dont disposés chacun sur l'axe longitudinal central (19, 119) du miroir correspondant (11, 111).

12. Dispositif selon une ou plusieurs des revendications précédentes, **caractérisé en ce qu'**un miroir (11, 111) est constitué par un corps (20, 120) dont la face concave (20a, 120a) est doublée d'un matériau réfléchissant de qualité optique.

13. Dispositif selon la revendication 12, **caractérisé en ce que** ledit corps (20, 120) est en matière métallique, en matière plastique, en matière céramique ou en matériaux composites.

14. Dispositif selon une ou plusieurs des revendications précédentes, **caractérisé en ce que** la courbure de la parabole qui forme le paraboloïde dont ledit miroir (11, 111) est un secteur est calculée à l'aide de l'équation y = Ax² + Bx + C, dans laquelle le paramètre A vaut de 0 à 10, le paramètre B vaut de 0 à 10 et le paramètre C vaut de -100 à +100.

15. Dispositif selon l'une quelconque des revendications précédentes, **caractérisé en ce que** ledit support (23, 123) est en matière apte à dissiper l'excédent de chaleur dégagé par l'élément récepteur supporté (14, 114).

16. Dispositif selon une ou plusieurs des revendications précédentes, **caractérisé en ce que** lesdites parties inférieures (21, 121, 23a, 123a) du corps du miroir (20, 120) et du support (23, 123) pour un élément récepteur (14, 114) sont sensiblement en T et sont conçues pour être insérées dans les logements correspondants (22, 24, 122, 124) formés par des encoches de forme complémentaire accessibles d'un côté du socle (15, 115).

17. Dispositif selon une ou plusieurs des revendications précédentes, **caractérisé en ce que** le bord supérieur d'extrémité (25, 125) et le bord inférieur d'extrémité (26, 126) du miroir (11, 111) sont tronqués dans une direction parallèle à la direction du rayonnement (12).

18. Dispositif selon une ou plusieurs des revendications précédentes, **caractérisé en ce que** ledit support (23, 123) pour un élément récepteur (14, 114) a un trou traversant (27, 127) pour l'écoulement d'un liquide de refroidissement pour la récupération d'énergie sous forme de chaleur.

19. Dispositif selon une ou plusieurs des revendications précédentes, **caractérisé en ce qu'**il comprend un moyen pour suivre automatiquement la source du rayonnement (12) afin de modifier l'orientation dudit dispositif (10, 110).

20. Dispositif selon une ou plusieurs des revendications précédentes, **caractérisé en ce que** ledit miroir sensiblement parabolique (211) est composé d'une pluralité d'éléments réfléchissants disposés côte à côte (231, 232, 233, 234), lesdits éléments réfléchissants (231, 232, 233, 234) étant profilés de manière à prendre approximativement la forme d'un secteur parabolique et étant conçus pour exécuter sa même fonction de réflexion de rayonnement vers une même zone de réception active (213) d'un élément récepteur (214) disposé en face.

21. Dispositif selon une ou plusieurs de revendications précédentes, **caractérisé en ce que** le miroir sensiblement parabolique (211) peut être réalisé à l'aide d'usinages, de micro-usinages et de traitements de surface de manière à avoir une surface réfléchissante qui n'est plus unique et continue, mais une pluralité d'éléments réfléchissants qui forment une surface réfléchissante discontinue.
